# EUROPEAN PATENT SPECIFICATION

(11) **EP 3 976 536 B1**
(45) Date of publication and mention of the grant of the patent: **13.09.2023**
(21) Application number: 20731591.2
(22) Date of filing: 29.05.2020
(51) Int. Cl.: C02F 1/04, C02F 1/06, F28D 13/00, B01D 1/06, B01D 1/00, B01D 1/26

(54) **WASTE WATER TREATMENT BY EVAPORATION AND PREVENTION OF FOULING WITH CLEANING PARTICLES**
ABWASSERBEHANDLUNG DURCH VERDAMPFUNG UND VERHINDERUNG VON VERSCHMUTZUNG MIT REINIGUNGSPARTIKELN
TRAITEMENT D'EAUX USÉES PAR ÉVAPORATION ET PRÉVENTION DE L'ENCRASSEMENT AVEC PARTICULES DE NETTOYAGE

(30) Priority: 31.05.2019 NL 2023243
(43) Date of publication of application: 06.04.2022
(73) Proprietor: TAPROGGE Gesellschaft mbH, 58300 Wetter (DE)
(72) Inventor: VAN BEEK, Marinus Cornelis, 3771 NG Barneveld (NL)
(74) Representative: V.O.
(86) International application number: PCT/NL2020/050351
(87) International publication number: WO 2020/242317

(56) References cited:
- WO-A1-2018/007942
- CA-A1- 2 863 015
- US-B2- 8 075 740
- VALLESPIN ET AL.: HEAT EXCHANGER FOULING AND CLEANING, 2017, pages 293-298, XP002798178, cited in the application

## Description

The invention is in the field of process waste water treatment. In particular the invention is directed to a process and an apparatus for the evaporation of a waste water stream comprising a mixture of inorganic and organic materials, for instance waste water originating from a dyestuff production process.

In various chemical production processes, a waste water stream comprising a mixture of organic and inorganic materials is obtained. The stream may originate from upstream processes such as extraction and washing or the addition of acidic or basic solution to neutralize a reaction mixture, or from reaction mixtures involving for instance organometallic compounds. Also, various waste streams may be combined for a joined further treatment such as concentration by evaporation of the water and finally deposition of the dry matter, e.g. after a post treatment step.

For treating aqueous waste streams, forced circulation evaporators are widely used especially when the liquid is known to give fouling of the heat transfer surface. Forced circulation evaporation include the use of both one or more heat exchangers and one or more flash separation units in conjunction with circulation of the water in order to remove vapor by flashing after the heat exchanger to avoid boiling in the heat exchanger tubes as this will give rise to enhanced fouling. Such heat exchangers are typically of the shell and tube type, and include a shell that is traversed by a bundle of tubes, the shell typically being provided with an inlet and an outlet so as to condense steam on the shell side of the tubes, and the tubes being arranged to pass recirculating process liquid therethrough so as to receive condensation heat via the inner surface of the tubes.

In Vallespin et al. Heat Exchanger Fouling and Cleaning, 2017, pages 293-298, the evaporation of water containing dissolved solids for water recovery, solids recovery or liquid waste volume reduction is described.

In WO2018007942, a thermal desalination system configured to produce product water and brine and a fluidized bed crystallizer, configured to remove dissolved minerals and/or solids from the water, wherein the fluidized bed crystallizer is disposed between at least two effects of the multi-effect evaporator, is described.

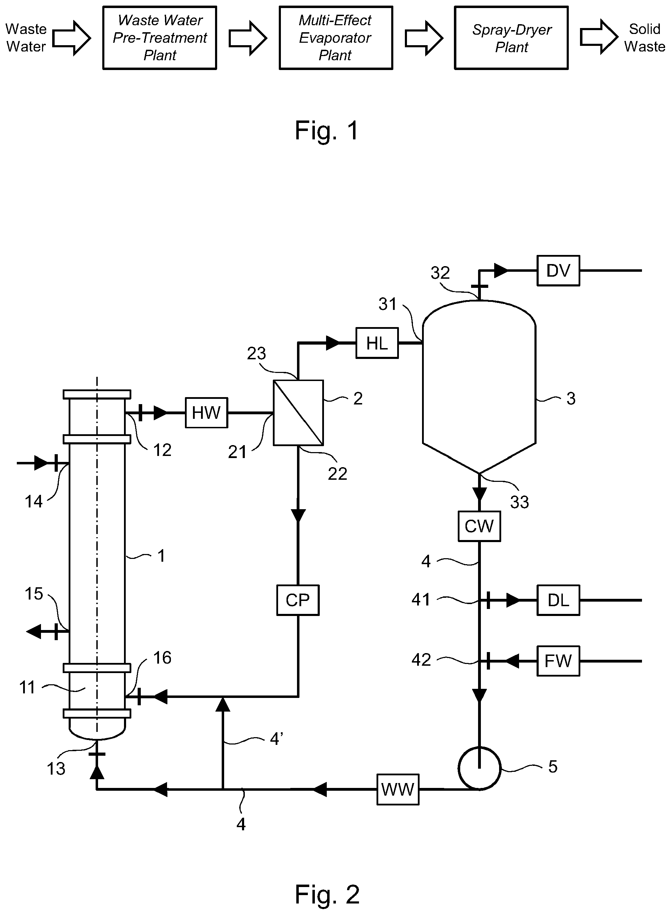

In Figure 1, a typical waste treatment scheme involving a multi-effect evaporation is illustrated. After a pre-treatment of the waste water in a pre-treatment plant, the water stream is concentrated in the multi-effect evaporator plant such that the waste stream can eventually be dried in a post-treatment step like a spray-dryer plant.

A drawback of evaporators in general, and also of the forced circulation ones that apply a shell and tube heat exchanger is the fouling on the inner surface of the heat exchanger over which the waste stream flows. Fouling is typically caused by deposition such as precipitation or crystallization of components in the waste stream. When a fouling layer is formed it negatively influences the operation efficiency of the forced circulation evaporators. For instance, a multi-effect forced circulation evaporator (MEE) plant that is operated to treat a waste water stream from dyestuff production processes is normally operated for a period of 12 to 15 days and then needs to be shut down for 5 to 7 days for cleaning, typically by high-pressure water jet cleaning. In most cases cleaning is so difficult that some layers still remain. Post-cleaning the plant can run at only 80% of the capacity on day 0 and the capacity drops to 50% before the next cleaning. Companies apply various solutions such as the addition of chemicals to reduce crystallization, chemical cleaning, high pressure water jet cleaning and redundancy in equipment to deal with the fouling. These solutions however lead to downtime of equipment and additional costs in terms of CAPEX and OPEX.

Fouling in forced circulation evaporators is particular problematic in evaporators treating waste water streams comprising a mixture of inorganic and organic materials, because such streams form notoriously hard and strongly adhesive fouling layer. The fouling layer in these cases is generally insoluble in water and even in a 10 wt.% hydrochloric acid solution. It is believed that the hardness and adhesiveness of this fouling layer is at least partially caused by the chemical composition of the layer, and in particular by the presence of the organic material and the nature thereof. Organic materials and in particular those originating from dyestuff production processes can be thermo-reactive compounds by which their properties change upon heating, which may result in stronger adhesion and increased hardness. Despite the long felt need for a solution, in particular in this field, no satisfying method has been provided that sufficiently addresses the fouling problem.

The present inventors have surprisingly found that fouling deposition of the inorganic and organic materials on the internal surface of the heat exchanger through which the stream of waste water flows can be mitigated by passing said waste water stream through the heat exchanger together with cleaning particles. Advantageously, the present invention provides a self-cleaning principle, thereby making it unnecessary to shut down the process to carry out a separate cleaning.

Accordingly, the invention is directed to a process for the evaporation of a waste water stream comprising a mixture of inorganic and organic materials, said process comprising passing a waste water stream together with cleaning particles through a shell and tube heat exchanger of a forced circulation evaporator to mitigate fouling deposition on the internal surface of the heat exchanger through which the stream of waste water flows in accordance with claim 1.

The mitigation of fouling with cleaning particles has previously been carried out on a condenser that uses seawater and a brine from oil and gas extraction processes, where the scaling of inorganic materials such as calcium carbonate is observed (see *e.g.* Vallespin et al., Heat Exchanger Fouling and Cleaning (2017) p. 293-298 and US8075740). These fouling layers however, are known to be less hard and less adhesive than the fouling layers of mixture of inorganic and organic materials and as such, the mild scraping effect of the cleaning particles is sufficient to clean the fouling layers from the surfaces, even in cases where a layer having a thickness of 3 mm or more had been formed.

The present inventors however, have surprisingly found that fouling deposition in the treatment of the waste water in accordance with the present invention can particularly effectively be mitigated if the scraping of the fouling deposition is carried out in an early stage, *i.e.* before a thick fouling layer has the chance of being formed. Thus, unexpected, even in cases where the mild scraping effect of the particles on the hard and adhesive fouling deposition is insufficient to remove it, said fouling can still be mitigated by preemptive or early cleaning. Accordingly, in a preferred embodiment of the present invention, the waste water stream is passed through the heat exchanger with the particles before a fouling deposition with a layer thickness of more than 3 mm, preferably more than 1 mm, more preferably more than 0.5 mm has developed. In particular, the waste water stream is passed through the heat exchanger with the particles from the start of the process to remove the fouling on the surface of the tubes ab initio, i.e. to remove fouling as it starts to build up.

Without wishing to be bound by theory, the present inventors believe that the particular hardness and adhesiveness of the scaling originating from the waste water stream comprising inorganic and organic materials is at least partially caused by further reaction of the organic materials at the elevated temperatures at the surface of the heat exchanger. Typical temperatures at which the heat exchanger is operated on the shell side, i.e. the side at which the vapor condenses on the outside of the tubes of the heat exchanger, lie in the range of 110 to 130 °C. By the formation of the fouling layer at these temperatures, the organic materials may react, e.g. polymerize, to form a hard and adhesive material. The inclusion or incorporation of inorganic materials is believed to even further harden the scaling. Based on the present invention, the inventors believe that by cleaning the surface with the cleaning particles in an early stage, reaction of the organic materials may be limited or even prevented.

The present invention is found to be particularly suitable for treatment of waste water streams originating from dyestuff manufacturing processes. Dyestuff such as reactive dyes, disperse dyes, acid dyes, vat dyes, basic dyes, sulfur dyes and direct dyes, typically contain thermo-reactive organic compounds, in particular aromatic compounds and/or compound with reactive groups. These dyes or molecular parts thereof can be present in the waste water stream and result in the scaling. The inorganic materials typically comprise one or more salts selected from the group consisting of ammonium salts, potassium salts, sodium salts, magnesium salts and calcium salts, preferably from the group consisting of calcium carbonate, calcium sulfate, sodium chloride, sodium sulfonate, magnesium sulfonate and magnesium carbonate. The combination of thermo-reactive organic materials and the inorganic materials are thus believed to result in a particularly hard and adhesive scaling due to the inclusion of inorganic materials in the organic reaction products, formed in the scaling at the elevated temperatures. The thermo-reactivity of compounds is to be assessed under the operation conditions according to the present invention, thus for instance under the steam temperature with which the waste water stream is heated.

The advantage of the present invention, and in particular of mitigating scaling by cleaning in an early stage, is that the process is suitable for various waste water stream compositions. In typical chemical production facilities, the composition of the waste water can highly vary due to the variation of the chemical processes carried out in the plant and due to variation of the intermediate treatment steps of waste water fluent. The present invention is a robust and reliable method, as no chemicals are used that are specific for only certain types of scaling. In addition, even very hard and adhesive scaling can be mitigated. The present invention is particularly suitable to mitigate scaling that is insoluble in 10 wt% hydrochloric acid.

Also, the present invention is suitable for evaporation of waste water having a high chemical and/or biological oxygen demand (COD/BOD). Accordingly, in particular embodiments of the present invention, the waste water stream has an COD of up 1000 mg/L, but the process may also allow for higher COD values such as up to 10000 mg/L, or even up to 100.000 mg/L or even higher than that. A lower limit of the COD value is not required, but the since the waste stream contains organic material, the COD is always higher than 0 mg/L. The feed of waste water that originates from a chemical plant (e.g. a dye stuff plant) may have a COD between 25,000 and 30,000 mg/L. The waste water stream has a typical COD in the range of about 5,000 mg/L to about 100,000 mg/L. It is believed that the higher the COD level, the harder and more adhesive the fouling layer may become over time, in particular in case the organic materials comprises thermo-reactive organic materials.

The cleaning particles may be fed to the tubes from a fluidized bed of particles, e.g. a fluidized bed that is maintained in an inlet at the bottom of the heat exchanger. The fluidized bed may be maintained in quasi stationary condition so that cleaning particles exit the bed to flow through the tubes with the waste water stream, and are subsequently fed back to the bed. The particles may be recirculated separately from the waste water stream, e.g. by separating the cleaning particles from the waste water stream using a gravity separator connected to an outlet at the top of the heat exchanger, and feeding them back to the inlet at the bottom via a downcomer using gravity. The waste water stream without the particles may then pass through a flash vessel, and the liquid fraction of the waste water stream may be fed back to the heat exchanger.

Cleaning particles that are suitable for the present invention have a typical dimension in the range of 1 to 5 mm, preferably in the range of 2 to 4 mm such as about 3 mm for ceramics and 2 mm for stainless steel. The particles can be based on various materials such as metal and ceramics. Ceramic cleaning particles are preferred for cost effectiveness. However, after extensive evaluation of various particles materials, the present inventors surprisingly found that particularly good results, especially in term of low erosion of the particles, can be obtained if said cleaning particles comprise stainless steel particles *(i.e.* particles based on, comprising or essentially consisting of stainless steel). Stainless steel particles are typically economically less attractive than ceramic particles, but for the mitigation of the hard and adhesive scaling in accordance with the present invention, the better resistance towards erosion of the stainless-steel particles was found to lead to an overall preference for the stainless-steel particles.

The cleaning particles are typically present in the stream passing through the heat exchanger in 2 to 10 vol%, based on the total volume of the waste water stream including the cleaning particles. In the art, the volume fraction of fluid per volume of the tube of the heat exchanger through which the waste water flows is typically called porosity of the waste stream. The remainder of this volume is taken up by the particles. The waste water stream of the present invention thus typically has a porosity in the range of 90 to 98%, preferably in the range of 92 to 96% such as about 94%. This porosity was found to be a good balance between effective scaling mitigation and pressure drop over the total system.

Another process parameter that was found to be a balance between effective scaling mitigation and prevention or limitation of erosion of the equipment is the flow rate of the waste water stream through the heat exchanger. It was found that very high flow rates were not required, but that low flow rates are generally less effective in mitigating the scaling. Accordingly, a flow rate of about 0.5 to about 0.7 m/s is preferred.

The cleaning particles in the waste water stream passing through the tubes prevent buildup of fouling deposit on the inside of the tubes by applying scouring action. Steam that is used in the shell side of the first effect of the heat exchanger may conventionally have a temperature in the range of 110 -130 °C. It has been found that the cleaning is so effective, that the temperature of the steam supplied to the first effect may be significantly higher than in the prior art without buildup of a fouling layer, and may e.g. be in the range of 130 -160°C. This higher temperature can significantly reduce the required heat transfer area therefore making the MEE-plant more compact. The steam temperature may in accordance with the invention thus be in the range of about 110 to about 160°C, preferably in the range of 130 to about 160 °C.

Steam of this temperature at the flow rate described above, typically result in a temperature increase of the waste water in the range of 2 to 4 °C. By this relatively low temperature increase, boiling of the waste water in the heat exchanger tubes is suppressed, e.g. by the water column pressure that is present by the arrangement with the particle separator and the flash vessel. The evaporator can accordingly lead to a concentration of the waste water of about 25 to 40 wt%.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or crosssection illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

In Figure 2, a typical setup of a forced circulation evaporator in accordance with the present invention is schematically illustrated. The shell and tube heat exchanger (1) is arranged upright, in particular placed vertically (enable suppression of early water boiling by the water column pressure) and comprises an inlet compartment (11) at the bottom adapted for maintaining a uniform fluidized bed of the cleaning particles so that a portion of particles of the bed can leave the bed and flow upwards through the heat exchanger tubes towards the outlet at the top of the heat exchanger (12). The cleaning particles in the waste water stream passing through the tubes may then prevent buildup of fouling deposit on the inside of the tubes by applying scouring action. The heat exchanger further comprises an inlet (13) to enable the input of the waste water stream (WW). Further, the heat exchanger comprises the steam in- and outlets (14, 15). The temperature of the steam at the inlet (14) may be in this example be in the range of 130 to about 160 °C The shell and tube heat exchanger thus preferably comprises a fluidized bed heat exchanger. Examples of fluidized bed heat exchangers that are suitable for the present invention are described in WO 02/25201, Vallespin et al., Heat Exchanger Fouling and Cleaning (2017) p. 293-298 and Klaren et al., Self-Cleaning Fluidized Bed Heat Exchangers for Severely Fouling Liquids and their Impact on Process Design, Heat Exchangers-Basic Design Applications, ed. Mitrovic, J*..*

In Figure 2, the outlet 12 is connected to a solid liquid separator (2), *e.g.* a gravity separator *(vide infra),* that is configured to separate at least most of the cleaning particles from the heated waste water (HW) that enters via an inlet (21) of the solid liquid separator. A particle outlet (22) and a liquid outlet (23) of the solid liquid separator allow respectively a concentrated cleaning particles stream (CP) and the heated waste water liquid (HL) to exit the solid liquid separator. The concentrated cleaning particles stream is fed back via a downcomer to the compartment 11 under gravity and by the control flow (4') which is small portion of the main liquid circuit. The recirculated stream of particles replenishes the fluidized bed in the inlet and keeps it in a quasi stationary state. The liquid outlet of the solid liquid separator (23) is connected to a flash vessel (3) via a flash vessel inlet (31). The flash vessel further comprises a vapor outlet (32) and a liquid outlet (33). The vapor outlet 32 allows the discharge of discharge vapor (DV) from the flash vessel and the liquid outlet 33 allows the outflow of the concentrated waste water stream (CW) to exit the flash vessel into the liquid circuit (4) to which is connected a waste water liquid outlet (41) and a waste water liquid inlet (42) which respectively allow the output of concentrated waste water liquid (DL) and inlet of a fresh waste water (FW) into the forced circulation evaporator. To the liquid circuit (4) is connected a circulation pump device (5) that is configured to pump the concentrated waste water stream (WW) to the inlet 13 of the heat exchanger. Further, the particle outlet (22) is connected to the compartment for distributing the fluidized particles (11) via the particle inlet (16) such the concentrated particles stream (CP) can be recycled into the heat exchanger.

In a typical embodiment of the forced circulation evaporator, the fluidized bed heat exchanger is connected to a solid liquid separator in order to separate the cleaning particles from the heated waste water to allow separate recycling of the cleaning particles into the heat exchanger. Various solid liquid separator devices can suitably be employed to this end. For instance, sieve plates, hydro cyclones and gravity separators are suitable. The inventors however have found that for the present invention, sieve plates are generally less preferred as they can lead to problems with clogging of the sieve by dirt. This is surprising because previous evaporator systems, for instance those used to treat brine from oil and gas extraction processes, sieve plates are successfully used in the evaporator system. It was found that for the present invention, gravity separators can particularly suitably be employed. Although a hydro cyclone may generally be preferred for its smaller dimensions, its use in the present invention is actually less preferred for reasons of erosion. The solid liquid separator for the present invention is typically required to separate about 20 to 30 kg/s of solid particles from liquid. A gravity separator was found most suitable to this end.

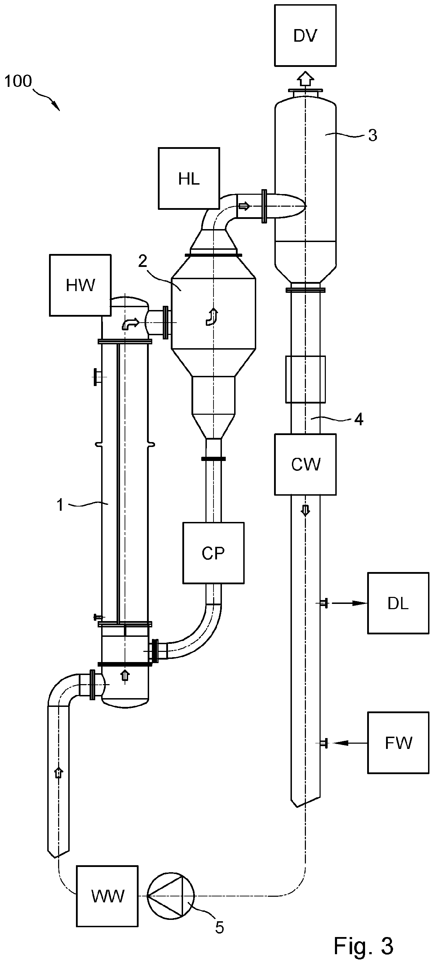

Accordingly, in a preferred embodiment, as illustrated in Figure 3, the evaporator (100) of the present invention comprises:
- the fluidized bed heat exchanger (1) that is configured to receive a particle loaded waste water stream (LW) and heat a stream of waste water together with cleaning particles to form a stream of heat waste water containing said cleaning particles (HW),
- a solid liquid separator (2) configured to receive the stream of heated waste water containing said cleaning particles (HW) and to separate a stream of concentrated cleaning particles (CP) from the heated waste water liquid (HL);
- a flash vessel (3) configured to receive the heated waste water liquid (HL) and to discharge water vapor (DV) and a stream of concentrated waste water (CW) into a liquid circuit (4);
- liquid circuit (4) that is connecting a waste water liquid outlet (41) that is configured to discharge concentrated waste water (CW), and which liquid circuit (4) is connected to a waste water liquid inlet (42) that is configured to lead fresh waste water (FW) into the circuit to form a waste water stream (WW);
- wherein said solid liquid separator comprises a gravity separator.

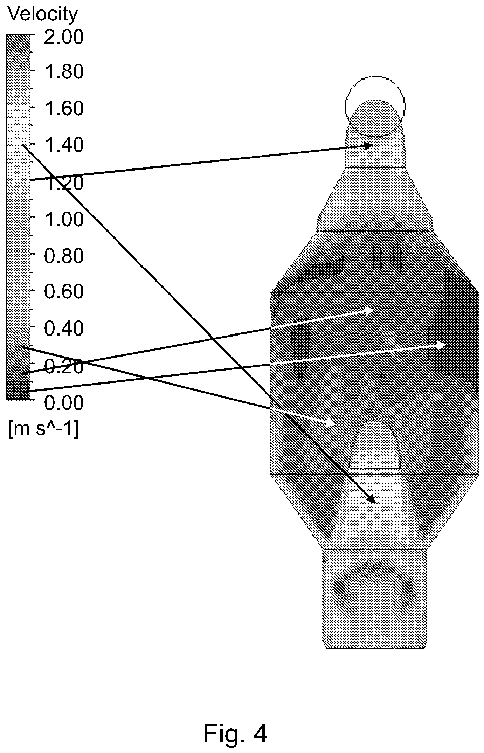

In Figure 4, the computational fluid dynamics (CFD) analysis results for the flow distribution and velocities for the heated waste water liquid with spherical cleaning particles of 3 mm in diameter and made of ceramics in the particle separator are illustrated. It is apparent from that above the inlet, the flow velocities are lower or equal to the falling velocity of ceramic cleaning particles and any particle carryover to the flash vessel can essentially be avoided.

For thermodynamic efficiency or good steam economy, the vapor that is generated in the forced recirculation evaporator may be reused. In particular, the vapor generated in the flash vessel may in an embodiment that is not shown leave the vapor outlet (32) and be (re) compressed and fed to the steam side of the shell at the steam inlet (14), e.g. in a single effect forced circulation evaporator using mechanical vapor compression (MVC) or mechanical vapor recompression (MVR) techniques. The vapor that is generated in the flash vessel may also be reused in a further stage of a multi effect evaporator (MEE) plant that includes a series of forced circulation evaporators operated in subsequent stages to more efficiently utilize the generated vapor. In particular, the vapor generated in the flash vessel may leave the vapor outlet (32) and may be fed to the steam inlet (14) of the shell side of a further shell and tube heat exchanger.

The forced circulation evaporator as described herein above is part of an MEE plant. The inventors surprisingly found that when the forced circulation evaporator and the process therewith according to the present invention is used in a MEE plant, it can suffice to pass the waste water stream together with cleaning particles through a shell and tube heat exchanger only in the first effect *(i.e.* the first forced circulation evaporator in the MEE plant). Surprisingly, actively mitigating scaling in the first effect, also mitigates or strongly reduces fouling of the subsequent effects even if these effects do not comprise the fluidized bed heat exchangers but are based on conventional heat exchangers. As such, another aspect of the present invention is an MEE plant wherein at least one, preferably only the first effect comprises the fluidized bed heat as described herein, while the subsequent effects may comprise conventional heat exchangers without cleaning particles.

In general, it may be advantageous to equip an MEE plant or to carry out a multi-effect evaporation process with the fluidized bed of cleaning particles as described herein only to the extend it is required to mitigate fouling. In other words, if equipping certain effects of an MEE plant or to carry out a multi-effect evaporation process with the fluidized bed of cleaning particles is not required to mitigate fouling in these effects because fouling does not occur, it is preferable do omit the fluidized bed of cleaning particles from those effects. This reduces investment costs. In fact, the above-described surprising finding that actively mitigating scaling in the first effect also mitigates fouling in the subsequent effects of the MEE plant is not necessarily limited to the first and subsequent effects only. One reason for this is that it is not necessarily the first effect in which the most fouling may occur. For instance, in a MEE process applying forward feed, it may be the last effect where the concentration of the mixture comprising organic and inorganic materials is the highest (but where the temperature is the lowest) that conditions are such that fouling is possibly predominant.Therefore, in general, it can be seen that the application of the fluidized bed of cleaning particles in accordance with the present invention can be advantageous of one but not all effects are equipped with the cleaning particles.

Accordingly, an aspect of the present invention is directed to a multi-effect evaporation process for the evaporation of a waste water stream comprising a mixture of inorganic and organic materials, said process comprising more than one forced circulation evaporator effects in series of which more than one and less that all effects comprise subsequently passing a waste water stream together with cleaning particles through a shell and tube heat exchanger of a forced circulation evaporator to mitigate fouling on the internal surface of the heat exchanger through which the waste water stream flows, in accordance with claim 1.

Another aspect of the invention is, in line with the above-described MEE process, a multi-effect evaporator (MEE) plant comprising more than one forced circulation evaporator effect in series of which one or more and less that all effects comprise a shell and tube heat exchanger with a fluidized bed of cleaning particles that are arranged to pass through the tubes with a stream of waste water, in accordance with claim 14.

Typically, if cleaning particles are used in an effect, they are recirculated while the concentrated waste water stream is continued to the next effect. Separation of the cleaning particles and the heated waste water stream or the concentrated waste water stream can for example be carried out with the solid liquid separator as described herein.

In certain MEE processes, fouling may, if left untreated, most predominantly occur in those effects with the most extreme working temperatures. In a particular embodiment, it is according preferred that those effects (e.g. one, two, three or more effects) with the most extreme working temperatures relative to all effects of the multi-effect evaporation process comprise said passing the waste stream together with the cleaning particles through the shell and tube heat exchanger of the forced circulation evaporator. With most extreme working temperatures is meant herein either the highest or lowest temperatures to which the respective waste water stream is heated when passing through the heat exchanger.

Similarly, in certain MEE processes, fouling, if left untreated, may most predominantly occur in those effects with the higher concentration of the mixture of inorganic and organic materials. Accordingly, it may also be preferably to consider this parameter for deciding which effects to equip. Alternatively or additionally to considering the working temperatures according to the previous paragraph. As such, in an embodiment it may be preferred that those effects (e.g. one, two, three or more effects) with the highest concentration of said mixture in the waste water stream relative to all effects of the multi-effect evaporation process comprise said passing the waste stream together with the cleaning particles through the shell and tube heat exchanger of the forced circulation evaporator.

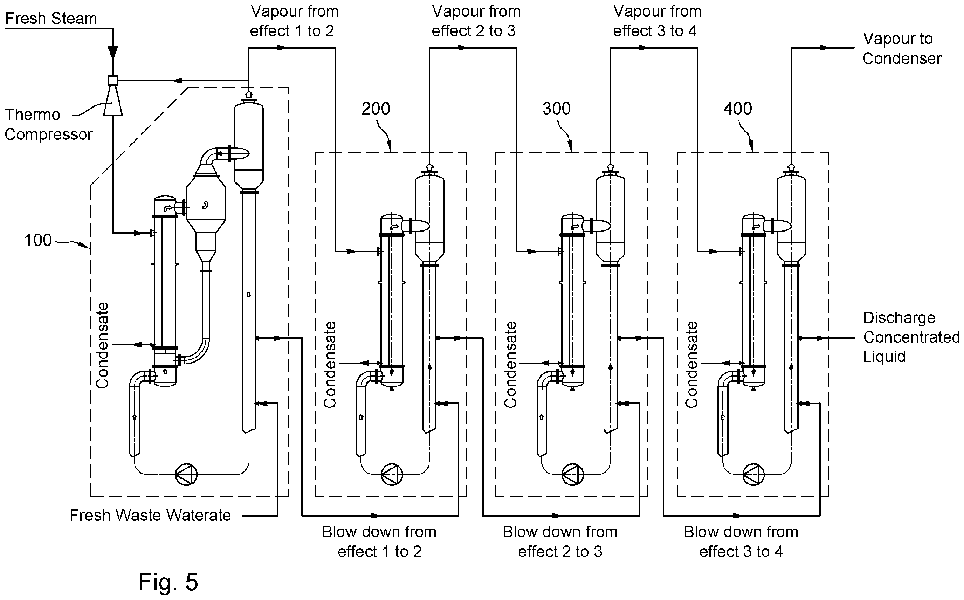

In Figure 5, an MEE according to the present invention is schematically illustrated. In the figure, four effects (100, 200, 300, 400) have been included but the invention is not necessarily restricted to this amount of effects. The first effect (100) comprises the forced circulation evaporator including the fluidized cleaning particles as illustrated in Figure 3. For sake of clarity, the reference numbers and stream labels have been omitted. The further effects in Figure 5, *i.e.* effects numbers 2 (200), 3 (300) and 4 (400) are conventional forced circulation evaporators. As shown in Figure 5, from every heat exchanger a condensate flow results. This condensate flow can optionally be used to preheat the incoming waste water feed or can be fed into the shell of the heat exchanger of the next effect where it will flash and give an additional input of heat. Condensate flashing as it can be called, can be used to increase the energy efficiency. The vapor that is generated in the last effect, effect 4 (400), is condensed in a condenser. It is also possible to use part of the vapor in a condenser to act as an additional pre-heater.

In Figure 5, an optional thermo compressor (TVR) is also included, which has a prime purpose to further increase the efficiency. The TVR is a thermo compressor which can use fresh steam at a relatively higher pressure to suck in vapor with a lower pressure yielding a vapor mix with a pressure and temperature higher than the vapor coming from the first effect which makes is possible to use as heat source in the shell of the heat exchanger. The use of a TVR, has (about) the same effect on the steam economy as adding one effect to a MEE.

The MEE in accordance with the present invention can be used with and without a TVR. Also in case of a single-effect evaporator according to the invention, the TVR may or may not be used. In case no TVR, is used, fresh steam is fed directly to the heat exchanger of the first effect. When using no TVR, mostly the steam is reduced in pressure and temperature as to keep wall temperatures in the heat exchanger limited in order to reduce the fouling tendency. Advantageously, with the technology according to the present invention, higher steam temperatures can be applied because the higher fouling tendency is mitigated by the cleaning particles. Higher steam temperatures allow the plants to be built more compact.

In accordance with the present invention, a conventional heat exchanger in a forced circulation evaporator can be retrofitted with a fluidized bed heat exchanger. This allows for a facile adaption of existing system, without large costs.

As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features.

For the purpose of clarity and a concise description features are described herein as part of the same or separate embodiments, however, it will be appreciated that the scope of the invention may include embodiments having combinations of all or some of the features described.

The invention can be illustrated with the following examples.

### Example 1

An existing, conventional full-scale evaporator for the treatment of waste water from a dyestuff producing company was retrofitted with a fluidized bed arrangement in accordance with the invention. The retrofit included addition of some specific components for the operation of a fluidized bed like an inlet channel for particle distribution and a gravity separator for separation of particles from the circulating fluid. A setup as illustrated in Figure 2 was obtained as a first effect of a multi effect evaporator (MEE) plant. On average the steam temperature into the 1st effect was 115 °C. The maximum evaporation capacity reached with this plant was around 4.8 m³/h.

The waste water may at the infeed e.g. have the following composition;
COD level of at least 20,000 mg/L
BOD level of at least 9,000 mg/L
TDS level of at least 40,000 mg/L
and elements or K, Na, CaCO₃ (hardness), Cl, SO4 all above 1000 mg/L.

Typical waste water was found to have the following composition:

| | |
|---|---|
| NH₄ + NH₃ | 350 mg/L |
| K | 1400 ppm |
| Na | 9600 ppm |
| Mg | 170 ppm |
| Ca | 300 ppm |
| | |
| | |
| CaCO₃ (hardness) | 4300 ml/L |
| Cl | 13700 mg/L |
| SO₄ | 7700 mg/L |
| CO₂ | 70 mg/L |
| chemical oxygen demand (COD) | 18500 mg/L |
| biological oxygen demand (BOD) | 9000 mg/L |
| Total dissolved solids (TDS) | 43000 mg/L |
| Total suspended solids (TSS) | 180 mg/L |
| pH | 6.4 |

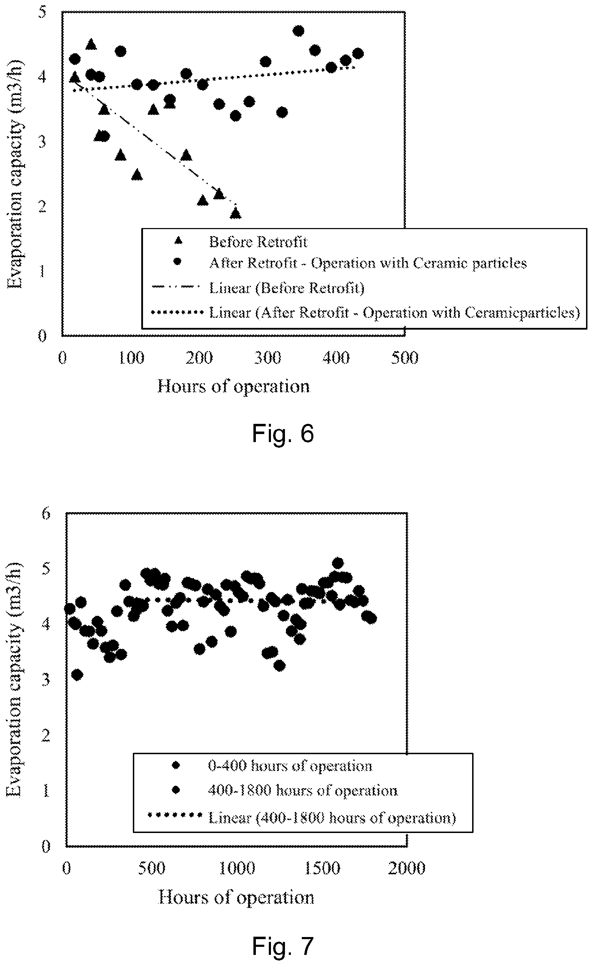

The plant performance was monitored by a daily balance of the feed entered, the condensate as collected and the product taken from the MEE. From the balance the daily average evaporation rate in m³/h is calculated. Figure 6 shows the evaporation capacity as function of the hours of operation of the plant with the original configuration and after the retrofit of the 1st effect to the self-cleaning fluidized bed heat exchanger. The data shown below is as received from the operations team of the plant.

During the first 400 hours of operation with the fluidized bed the evaporation capacity has an increasing slope as compared to the operation with the conventional heat exchanger. Although the heat exchanger tubes were cleaned before the retrofit using high pressure water jet cleaning, not all tubes were 100% clean. Therefore, over the duration of 400 hours, likely some part of the existing fouling layer was removed due to the scouring action of fluidized bed. This hypothesis, that the tubes were not 100% clean was later confirmed during an inspection where tubes with some fouling layer were discovered. This existing fouling layer also had a negative effect because, parts of the fouling layer that came loose resulted in clogging of some tubes that subsequently were filled with particles.

During the inspection also the other effects were inspected. It was found that the tubes of effect 2, 3 and 4 were cleaner than before the retrofit of the first effect. A possible explanation for the observation that the fouling in the other effects that were not retrofitted had reduced as well could be that the application of fluidized bed has reduced the size of solids in the system because of the grinding effect by the particle motion. The reduction of the solids size has helped in reducing the particulate fouling in the other effects of the MEE plant.

Considering the observations during the inspection, the heat exchanger tubes were again cleaned to remove old layers and the tubes clogged with particles were cleared. Subsequent to the inspection and the cleaning of the tubes the heat exchanger was restarted. Figure 5 shows the variation of evaporation capacity with further operation of the plant.

Figure 7 confirms that with longer term operation, the evaporation capacity has remained stable for the plant. The curve fit shown is only for operation after 400 hours when the tubes were cleaned, and the curve proves constant evaporation.

## Claims

1. Multi-effect evaporation process for the evaporation of a waste water stream comprising a mixture of inorganic and organic materials, said process comprising more than one forced circulation evaporator effects in series of which one or more and less than all effects comprise passing a waste water stream together with cleaning particles through a shell and tube heat exchanger of a forced circulation evaporator to mitigate fouling on the internal surface of the heat exchanger through which the waste water stream flows and wherein the one or more and less than all effects with the most extreme working temperatures and/or with the highest concentration of said mixture in the waste water stream relative to all effects of the multi-effect evaporation process comprise said passing the waste stream together with the cleaning particles through the shell and tube heat exchanger of the forced circulation evaporator.

2. Process according to claim 1, wherein only one effect, preferably the first effect of the multi-effect evaporation process comprise said passing the waste stream together with the cleaning particles through the shell and tube heat exchanger of the forced circulation evaporator.

3. Process according to any of the previous claims, wherein the waste water stream is passed through the heat exchanger with the particles from the start of the process to remove the fouling on the surface of the tubes as it starts to build up.

4. Process according to any of the previous claims, wherein said organic materials comprise thermo-reactive organic compounds, in particular aromatic compounds.

5. Process according to any of the previous claims, wherein said waste stream at the start of the process has a chemical oxygen demand (COD) in the range of 5,000 mg/L to 100,000 mg/L.

6. Process according to any of the previous claims, wherein said inorganic materials comprise one or more salts selected from the group consisting of ammonium salts, potassium salts, sodium salts, magnesium salts and calcium salts, preferably from the group consisting of calcium carbonate, calcium sulfate, sodium chloride, sodium sulfonate, magnesium sulfonate and magnesium carbonate.

7. Process according to any of the previous claims, wherein said waste water comprises waste water from a dyestuff production process, in particular from a dyestuff productions process for preparing reactive dyes, disperse dyes, acid dyes, vat dyes, basic dyes, sulfur dyes and/or direct dyes.

8. Process according to any of the previous claims, wherein said cleaning particles comprise stainless steel particles, preferably having a size in the range of 1 to 5 mm, preferably in the range of 1.5 to 2.5 mm such as about 2 mm.

9. Process according to any of the previous claims, wherein said waste water exiting said heat exchanger is led into a solid liquid separator, preferably a gravity separator, to yield a heated waste water liquid and a concentrated cleaning particles stream.

10. Process according to any of the previous claims, wherein a heated waste water stream exiting said heat exchanger is led into a solid liquid separator to yield a heated liquid stream and a concentrated particles stream, said heated liquid stream is led into a flash vessel to produce a vapor discharge stream and a liquid discharge stream and wherein at least part of said vapor discharge stream and/or liquid discharge stream is led into a further forced circulation evaporator step as part of a multi-effect evaporation process, preferably wherein the further steps of the multi-effect evaporation process are carried out without fluidized bed heat exchangers.

11. Process according to any of the previous claims, wherein the waste water stream flows through the heat exchanger with a flow velocity of about 0.5 to about 0.7 m/s.

12. Process according to any of the previous claims, wherein the waste water stream with particles has a porosity in the range of 90 to 98%, preferably in the range of 92 to 96% such as about 94%, wherein porosity is defined as the volume fraction of fluid per volume of the tube of the heat exchanger through which the waste water with particles flows.

13. Process according to any of the previous claims, wherein said heat exchanger is heated by providing steam having a temperature in the range of about 110 to about 160 °C, preferably in the range of 130 to about 160 °C.

14. Multi-effect evaporator (MEE) plant suitable for carrying out the method in accordance with any of the previous claims, said plant comprising more than one forced circulation evaporator effect in series of which one or more and less than all effects comprise a shell and tube heat exchanger with a fluidized bed of cleaning particles that are arranged to pass through the tubes with a stream of waste water, wherein the one or more and less than all effects that are adapted to carry out the process with the most extreme working temperatures and/or wherein the one or more and less than all effects that are adapted to receive the highest concentration of the mixture of inorganic and organic materials in the waste water stream relative to all effects of the multi-effect evaporation plant comprise said fluidized bed of cleaning particles.

15. Multi-effect evaporator (MEE) plant according to claim 14, wherein only one effect, preferably the first effect of the multi-effect evaporation plant comprise said fluidized bed of cleaning particles.

16. Multi-effect evaporator (MEE) plant according to any of claims 14-15, wherein said one or more evaporators that comprise a shell and tube heat exchanger with a fluidized bed of cleaning particles comprises:
- said fluidized bed heat exchanger (1) configured to heat a stream of waste water (WW) together with cleaning particles to form a stream of heated waste water containing said cleaning particles (HW),
- a solid liquid separator (2) configured to receive the stream of heated waste water containing said cleaning particles (HW) and to separate a stream of concentrated cleaning particles (CP) from the heated waste water liquid (HL);
- a flash vessel (3) configured to receive the heated waste water liquid (HL) and to discharge water vapor (DV) and a stream of concentrated waste water (CW) into a liquid circuit (4);
- liquid circuit (4) that is configured to discharge concentrated waste water (CW), and configured to lead fresh waste water (FW) into the circuit to form a waste water stream (WW);
wherein said solid liquid separator comprises a gravity separator.

## Patentansprüche

1. Multieffekt-Verdampfungsverfahren für die Verdampfung eines Abwasserstroms, umfassend eine Mischung von anorganischen und organischen Stoffen, das Verfahren umfassend mehr als einen Zwangsumwälzungsverdampfungseffekt in Reihe, wovon einer oder mehrere und weniger als alle Effekte Leiten eines Abwasserstroms zusammen mit Reinigungspartikeln durch einen Rohrbündelwärmetauscher eines Zwangsumwälzungsverdampfers umfassen, um Ablagerungen auf der Innenfläche des Wärmetauschers zu mindern, durch den der Abwasserstrom fließt, und wobei der eine oder die mehreren und weniger als alle Effekte mit den extremsten Betriebstemperaturen und/oder mit den höchsten Konzentration des Gemischs in dem Abwasserstrom relativ zu allen Effekten des Multieffekt-Verdampfungsverfahrens das Leiten des Abfallstroms zusammen mit den Reinigungspartikeln durch den Rohrbündelwärmetauscher des Zwangsumwälzungsverdampfers umfassen.

2. Verfahren nach Anspruch 1, wobei nur ein Effekt, vorzugsweise der erste Effekt des Multieffekt-Verdampfungsverfahrens, das Leiten des Abfallstroms zusammen mit den Reinigungspartikeln durch den Rohrbündelwärmetauscher des Zwangsumwälzverdampfers umfasst.

3. Verfahren nach einem der vorhergehenden Ansprüche, wobei der Abwasserstrom mit den Teilchen von Beginn des Verfahrens durch den Wärmetauscher geleitet wird, um die Ablagerungen auf der Oberseite der Rohre zu entfernen, wenn sie sich zu bilden beginnen.

4. Verfahren nach einem der vorhergehenden Ansprüche, wobei die organischen Materialien thermoreaktive organische Verbindungen, insbesondere aromatische Verbindungen, umfassen.

5. Verfahren nach einem der vorhergehenden Ansprüche, wobei der Abfallstrom zu Beginn des Verfahrens einen chemischen Sauerstoffbedarf (CSB) in dem Bereich von 5.000 mg/L bis 100.000 mg/L hat.

6. Verfahren nach einem der vorhergehenden Ansprüche, wobei die anorganischen Materialien ein oder mehrere Salze umfassen, ausgewählt aus der Gruppe bestehend aus Ammoniumsalzen, Kaliumsalzen, Natriumsalzen, Magnesiumsalzen und Kalziumsalzen, vorzugsweise aus der Gruppe bestehend aus Kalziumkarbonat, Kalziumsulfat, Natriumchlorid, Natriumsulfonat, Magnesiumsulfonat und Magnesiumkarbonat.

7. Verfahren nach einem der vorhergehenden Ansprüche, wobei das Abwasser Abwasser aus einem Färbemittelherstellungsverfahren, insbesondere aus einem Färbemittelherstellungsverfahren zum Herstellen reaktiver Farbstoffe, Dispersionsfarbstoffe, saurer Farbstoffe, Bottichfarbstoffe, Basisfarbstoffe, Schwefelfarbstoffe und/oder Direktfarbstoffen umfasst.

8. Verfahren nach einem der vorhergehenden Ansprüche, wobei die Reinigungspartikel Edelstahlpartikel umfassen, vorzugsweise mit einer Größe in dem Bereich von 1 bis 5 mm, vorzugsweise in dem Bereich von 1,5 bis 2,5 mm, wie ungefähr 2 mm.

9. Verfahren nach einem der vorhergehenden Ansprüche, wobei das Abwasser, austretend aus dem Wärmetauscher, in einen Feststoff-Flüssigkeitsabscheider geleitet wird, vorzugsweise in einen Schwerkraftabscheider, um eine erwärmte Abwasserflüssigkeit und einen konzentrierten Reinigungspartikelstrom zu ergeben.

10. Verfahren nach einem der vorhergehenden Ansprüche, wobei ein erwärmter Abwasserstrom, austretend aus dem Wärmetauscher, in einen Feststoff-Flüssigkeitsabscheider geleitet wird, um einen erwärmten Flüssigkeitsstrom und einen konzentrierten Teilchenstrom zu ergeben, der erwärmte Flüssigkeitsstrom in einen Entspannungsbehälter geleitet wird, um einen Dampfableitungsstrom und einen Flüssigkeitsableitungsstrom zu erzeugen, und wobei wenigstens ein Teil des Dampfableitungsstroms und/oder Flüssigkeitsableitungsstroms in einen weiteren Zwangsumwälzungsverdampfungsschritt als Teil eines Multieffekt-Verdampfungsverfahrens geleitet wird, vorzugsweise wobei die weiteren Schritte des Multieffekt-Verdampfungsverfahrens ohne Wirbelschichtwärmetauscher durchgeführt werden.

11. Verfahren nach einem der vorhergehenden Ansprüche, wobei der Abwasserstrom durch den Wärmetauscher mit einer Strömungsgeschwindigkeit von ungefähr 0,5 bis ungefähr 0,7 m/s strömt.

12. Verfahren nach einem der vorhergehenden Ansprüche, wobei der Abwasserstrom mit Teilchen eine Porosität in dem Bereich von 90 bis 98 %, vorzugsweise in dem Bereich von 92 bis 96 %, wie ungefähr 94 %, hat, wobei Porosität als der Volumenanteil von Flüssigkeit pro Volumen des Rohres des Wärmetauschers definiert ist, durch den das Abwasser mit Teilchen fließt.

13. Verfahren nach einem der vorhergehenden Ansprüche, wobei der Wärmetauscher durch Bereitstellen von Dampf mit einer Temperatur in dem Bereich von ungefähr 110 bis ungefähr 160 °C, vorzugsweise in dem Bereich von 130 bis ungefähr 160 °C, erwärmt wird.

14. Multieffekt-Verdampfer Anlage (MEE), geeignet zum Durchführen des Verfahrens nach einem der vorhergehenden Ansprüche, die Anlage umfassend mehr als einen Zwangsumwälzungsverdampfer-Effekt in Reihe, wovon einer oder mehrere und weniger als alle Effekte einen Rohrbündelwärmetauscher mit einem Wirbelbett von Reinigungspartikeln umfassen, die angeordnet sind, um die Rohre mit einem Abwasserstrom zu passieren, wobei der eine oder die mehreren und weniger als alle Effekte, die angepasst sind, um das Verfahren mit den extremsten Arbeitstemperaturen durchzuführen, und/oder wobei der eine oder die mehreren und weniger als alle Effekte, die angepasst sind, um die höchste Konzentration der Mischung von anorganischen und organischen Materialien in dem Abwasserstrom relativ zu allen Effekten der Multieffekt-Verdampfungsanlage zu erhalten, das Wirbelbett von Reinigungspartikeln umfassen.

15. Multieffekt-Verdampfer Anlage (MEE) nach Anspruch14, wobei nur ein Effekt, vorzugsweise der erste Effekt der Multieffekt-Verdampfungsanlage, das Wirbelbett aus Reinigungsteilchen umfasst.

16. Multieffekt-Verdampfer Anlage (MEE) nach einem der Ansprüche 14 - 15, wobei der eine oder die mehreren Verdampfer, die einen Rohrbündelwärmetauscher mit einem Wirbelbett aus Reinigungspartikeln umfassen, umfassen:
- den Wirbelbettwärmetauscher (1), konfiguriert, um einen Strom von Abwasser (WW) zusammen mit Reinigungspartikeln zu erwärmen, um einen Strom von erwärmtem Abwasser zu bilden, enthaltend die Reinigungspartikel (HW),
- einen festen Flüssigkeitsabscheider (2), konfiguriert, um den Strom von erwärmten Abwasser, enthaltend die Reinigungspartikel (HW), zu empfangen und einen Strom von konzentrierten Reinigungspartikeln (CP) von der erwärmten Abwasserflüssigkeit (HL) zu trennen;
- einen Entspannungsbehälter (3), konfiguriert, um die erwärmte Abwasserflüssigkeit (HL) zu empfangen und Wasserdampf (DV) und einen Strom von konzentriertem Abwasser (CW) in einen Flüssigkeitskreislauf (4) zu entladen;
- Flüssigkeitskreislauf (4), der konfiguriert ist, konzentriertes Abwasser (CW) zu entladen, und konfiguriert, um frisches Abwasser (FW) in den Kreislauf zu leitet, um einen Abwasserstrom (WW) zu bilden;
wobei der Feststoff-Flüssigkeitsabscheider einen Schwerkraftabscheider umfasst.

## Revendications

1. Procédé d'évaporation à effets multiples pour l'évaporation d'un flux d'eaux usées comprenant un mélange de matières inorganiques et organiques, ledit procédé comprenant plus d'un évaporateur à circulation forcée à effets en série dont un ou plusieurs et moins que tous les effets comprennent le passage d'un évaporateur flux d'eau ainsi que des particules de nettoyage à travers un échangeur de chaleur à calandre et tube d'un évaporateur à circulation forcée pour atténuer l'encrassement sur la surface interne de l'échangeur de chaleur à travers lequel le flux d'eaux usées s'écoule et dans lequel un ou plusieurs et moins de tous les effets ont le plus températures de travail extrêmes et/ou avec la concentration la plus élevée dudit mélange dans le courant d'eaux usées par rapport à tous les effets du processus d'évaporation à effets multiples comprennent ledit passage du courant de déchets avec les particules de nettoyage à travers l'échangeur de chaleur à calandre et tube du système d'évaporation forcée évaporateur à circulation.

2. Procédé selon la revendication 1, dans lequel un seul effet, de préférence le premier effet du procédé d'évaporation à effets multiples comprend ledit passage du flux de déchets avec les particules de nettoyage à travers l'échangeur de chaleur à calandre et tube de l'évaporateur à circulation forcée.

3. Procédé selon l'une quelconque des revendications précédentes, dans lequel le courant d'eaux usées traverse l'échangeur de chaleur avec les particules dès le début du procédé pour éliminer l'encrassement à la surface des tubes au fur et à mesure qu'il commence à s'accumuler.

4. Procédé selon l'une quelconque des revendications précédentes, dans lequel lesdits matériaux organiques comprennent des composés organiques thermoréactifs, notamment des composés aromatiques.

5. Procédé selon l'une quelconque des revendications précédentes, dans lequel ledit flux de déchets au début du procédé a une demande chimique en oxygène (DCO) dans la plage de 5 000 mg/L à 100 000 mg/L.

6. Procédé selon l'une quelconque des revendications précédentes, dans lequel lesdits matériaux inorganiques comprennent un ou plusieurs sels choisis dans le groupe constitué par les sels d'ammonium, les sels de potassium, les sels de sodium, les sels de magnésium et les sels de calcium, de préférence dans le groupe constitué par le carbonate de calcium, sulfate de calcium, chlorure de sodium, sulfonate de sodium, sulfonate de magnésium et carbonate de magnésium.

7. Procédé selon l'une quelconque des revendications précédentes, dans lequel lesdites eaux usées comprennent des eaux usées provenant d'un procédé de production de colorants, en particulier d'un procédé de production de colorants pour la préparation de colorants réactifs, de colorants dispersés, de colorants acides, de colorants de cuve, de colorants basiques, de colorants soufrés, et/ou des colorants directs.

8. Procédé selon l'une quelconque des revendications précédentes, dans lequel lesdites particules de nettoyage comprennent des particules d'acier inoxydable, ayant de préférence une taille dans la gamme de 1 à 5 mm, de préférence dans la gamme de 1,5 à 2,5 mm tel qu'environ 2 mm.

9. Procédé selon l'une quelconque des revendications précédentes, dans lequel ladite eau usée sortant dudit échangeur de chaleur est conduite dans un séparateur solide-liquide, de préférence un séparateur par gravité, pour produire une eau usée liquide chauffée et un flux concentré de particules de nettoyage.

10. Procédé selon l'une quelconque des revendications précédentes, dans lequel un flux d'eau usée chauffée sortant dudit échangeur de chaleur est conduit dans un séparateur solide-liquide pour donner un flux liquide chauffé et un flux de particules concentrées, ledit flux liquide chauffé est conduit dans une cuve de flash pour produire un flux de décharge de vapeur et un flux de décharge de liquide et dans lequel au moins une partie dudit flux de décharge de vapeur et/ou flux de décharge de liquide est conduite dans une autre étape d'évaporateur à circulation forcée dans le cadre d'un processus d'évaporation à effets multiples, de préférence dans lequel l'autre les étapes du procédé d'évaporation multi-effets sont réalisées sans échangeurs de chaleur à lit fluidisé.

11. Procédé selon l'une quelconque des revendications précédentes, dans lequel le courant d'eaux usées s'écoule à travers l'échangeur de chaleur avec une vitesse d'écoulement d'environ 0,5 à environ 0,7 m/s.

12. Procédé selon l'une quelconque des revendications précédentes, dans lequel le courant d'eaux usées avec des particules a une porosité dans la plage de 90 à 98 %, de préférence dans la plage de 92 à 96 % telle qu'environ 94 %, la porosité étant définie comme la fraction volumique de fluide par volume du tube de l'échangeur de chaleur à travers lequel s'écoule l'eau usée avec des particules.

13. Procédé selon l'une quelconque des revendications précédentes, dans lequel ledit échangeur de chaleur est chauffé en fournissant de la vapeur ayant une température dans la gamme d'environ 110 à environ 160°C, de préférence dans la gamme de 130 à environ 160°C.

14. Installation d'évaporateur multi-effets (MEE) adaptée à la mise en oeuvre du procédé selon l'une quelconque des revendications précédentes, ladite installation comprenant plus d'un effet d'évaporateur à circulation forcée en série dont un ou plusieurs et moins que tous les effets comprennent une coque, et un échangeur de chaleur tubulaire avec un lit fluidisé de particules de nettoyage qui sont agencées pour passer à travers les tubes avec un courant d'eau usée, dans lequel un ou plusieurs et moins de tous les effets sont adaptés pour réaliser le processus avec les températures de travail les plus extrêmes et/ou dans lequel un ou plusieurs et moins de tous les effets qui sont adaptés pour recevoir la concentration la plus élevée du mélange de matières inorganiques et organiques dans le flux d'eaux usées par rapport à tous les effets de l'installation d'évaporation à effets multiples comprennent ledit lit fluidisé de particules de nettoyage .

15. Installation d'évaporation multi-effets (MEE) selon la revendication 14, dans laquelle un seul effet, de préférence le premier effet de l'installation d'évaporation multi-effets comprend ledit lit fluidisé de particules de nettoyage.

16. Installation d'évaporateur à effets multiples (MEE) selon l'une quelconque des revendications 14 à 15, dans laquelle lesdits un ou plusieurs évaporateurs qui comprennent un échangeur de chaleur à calandre et tube avec un lit fluidisé de particules de nettoyage comprennent :
- ledit échangeur de chaleur à lit fluidisé (1) configuré pour chauffer un flux d'eau usée (WW) avec des particules de nettoyage pour former un flux d'eau usée chauffée contenant lesdites particules de nettoyage (HW),
- un séparateur solide-liquide (2) configuré pour recevoir le flux d'eaux usées chauffées contenant lesdites particules de nettoyage (HW) et pour séparer un flux de particules de nettoyage concentrées (CP) du liquide d'eaux usées chauffée (HL) ;
- une cuve de détente (3) configurée pour recevoir le liquide d'eaux usées chauffé (HL) et pour décharger de la vapeur d'eau (DV) et un courant d'eaux usées concentrées (CW) dans un circuit de liquide (4) ;
- un circuit de liquide (4) qui est configuré pour évacuer des eaux usées concentrées (CW), et configuré pour amener des eaux usées fraîches (FW) dans le circuit pour former un flux d'eaux usées (WW) ;
dans lequel ledit séparateur solide-liquide comprend un séparateur par gravité.
